# EUROPEAN PATENT APPLICATION

(11) **EP 2 511 757 A1**
(43) Date of publication of application: **17.10.2012**
(21) Application number: 12163147.7
(22) Date of filing: 04.04.2012
(51) Int. Cl.: G02F 1/1333, G02B 6/00

(54) **Display**

(30) Priority: 11.04.2011 JP 2011087190
(71) Applicant: Funai Electric Co., Ltd., Daito-shi, Osaka 574-0013 (JP)
(72) Inventor: SUZUKI, Yuto, Daito-shi, Osaka 574-0013 (JP)
(74) Representative: Grünecker, Kinkeldey, Stockmair & Schwanhäusser

(57) **Abstract**

This display (100) includes a light source (50), a display module (40) including a display cell (35) and a light guide (30) guiding light to the display cell, and a housing (80), storing the light source and the display module, integrally provided with a positioning portion (11, 12, 13) directly positioning at least either the display cell or the light guide.

## Description

### BACKGROUND OF THE INVENTION

### Field of the Invention

The present invention relates to a display, and more particularly, it relates to a display including a light guide.

### Description of the Background Art

A display including a light guide is known in general, as disclosed in Japanese Patent Laying-Open No. 2006-201210, for example.

In a display module described in Japanese Patent Laying-Open No. 2006-201210, the overall peripheral edge portions of a display panel (display cell) and a light guide are brought into contact with an inner peripheral portion of a resin frame in the form of a picture frame and stored therein, while the resin frame is stored in a back case and assembled into the display module. The assembled display module is mounted on a prescribed mounting position of a housing through a mounting portion provided on the back case for fixing the same. In other words, the resin frame and the back case conceivably serve as positioning members for mounting the display panel (display cell) and the light guide on prescribed mounting positions of the housing respectively.

In the display module described in Japanese Patent Laying-Open No. 2006-201210, however, the resin frame and the back case serving as the positioning members must be provided in order to position the display panel and the light guide respectively, and hence the numbers of components as well as assembling steps are disadvantageously increased.

### SUMMARY OF THE INVENTION

The present invention has been proposed in order to solve the aforementioned problem, and an object of the present invention is to provide a display capable of suppressing increase in the numbers of components and assembling steps.

A display according to an aspect of the present invention includes a light source, a display module including a display cell and a light guide stacked on the display cell for guiding light received from the light source to the display cell and a housing, storing the light source and the display module, integrally provided therein with a positioning portion directly positioning at least either the display cell or the light guide.

As hereinabove described, the display according to the aspect of the present invention is provided with the housing integrally provided therein with the positioning portion directly positioning at least either the display cell or the light guide so that no positioning members for positioning the display cell and the light guide may be separately provided, whereby increase in the numbers of components and assembling steps can be suppressed.

In the aforementioned display according to the aspect, the positioning portion preferably includes a protrusion positioning an edge portion of at least either the display cell or the light guide. According to this structure, at least either the display cell or the light guide can be easily positioned by simply providing the protrusion in the housing.

In the aforementioned display according to the aspect, the positioning portion preferably has a protrusion height larger than the total thickness of the display cell and the light guide. According to this structure, the positioning portion can be brought into contact with the display cell and the light guide over the whole in the thickness direction for positioning the display cell and the light guide, whereby the display cell and the light guide can be reliably positioned.

In the aforementioned display having the positioning portion including the protrusion, the housing preferably includes a front housing and a rear housing, and the protrusion is preferably integrally provided on the rear housing and formed in a riblike manner. According to this structure, the protrusion is provided on the rear housing less restricted in design than the front housing provided on the side of a display surface, whereby the protrusion provided on the rear housing for serving as the positioning portion can be inhibited from restricting flexibility in design.

In the aforementioned display having the positioning portion including the protrusion, the protrusion preferably includes a planar contact surface coming into contact with the display cell and the light guide, and is preferably formed to position the display cell and the light guide in a state where the contact surface is in surface contact with the display cell and the light guide. According to this structure, the protrusion can stably position the display cell and the light guide through the planar contact surface in surface contact with the display cell and the light guide.

In the aforementioned display having the housing including the front housing and the rear housing, the light guide and the display cell positioned and stored in the housing are preferably held between and fixed by the front housing and the rear housing. According to this structure, no fixing members may be separately provided for fixing the light guide and the display cell, whereby increase in the numbers of components and assembling steps can be further suppressed.

In the aforementioned display having the positioning portion including the protrusion, the protrusion preferably includes a first protrusion extending in a horizontal direction and vertically positioning lower surfaces of the display cell and the light guide and a second protrusion extending in a vertical direction and horizontally positioning side surfaces of the display cell and the light guide. According to this structure, the lengths of portions for positioning the display cell and the light guide can be increased due to the first protrusion extending in the horizontal direction and the second protrusion extending in the vertical direction, whereby the protrusion can stably position the display cell and the light guide.

In the aforementioned display having the protrusion including the first protrusion and the second protrusion, the first protrusion and the second protrusion are preferably formed to position both of the display cell and the light guide. According to this structure, the common first and second protrusions position both of the display cell and the light guide, whereby the structure of the display can be simplified.

In the aforementioned display having the protrusion including the first protrusion and the second protrusion, the protrusion preferably includes a third protrusion vertically and horizontally positioning upper portions of the display cell and the light guide. According to this structure, the third protrusion positions the display cell and the light guide in an upper direction in addition to the horizontal direction and a lower direction, whereby the display cell and the light guide can be more stably positioned.

In the aforementioned display having the protrusion including the first protrusion and the second protrusion, the protrusion is preferably provided with a pair of first protrusions and a pair of second protrusions, and the light guide preferably includes a projecting portion fitting into a space between one of the pair of first protrusions and one of the pair of second protrusions. According to this structure, the light guide can be precisely positioned by fitting the projecting portion thereof into the space between one of the pair of first protrusions and one of the pair of second protrusions.

In the aforementioned display having the light guide including the projecting portion fitting into the space between one of the pair of first protrusions and one of the pair of second protrusions, a clearance against thermal expansion is preferably provided between the other one of the pair of second protrusions and the light guide. According to this structure, the display can also cope with thermal expansion of the light guide while precisely positioning the light guide with the first and second protrusions.

The aforementioned display having the light guide including the projecting portion fitting into the space between one of the pair of first protrusions and one of the pair of second protrusions preferably further includes a reflection sheet, identical in shape to the light guide, for reflecting light leaking out of the rear surface of the light guide toward the light guide, and the positioning portion is preferably formed to position the light guide and the reflection sheet by directly coming into contact with the light guide and the reflection sheet. According to this structure, the common positioning portion positions both of the light guide and the reflection sheet, whereby the structure of the display can be inhibited from complication.

In the aforementioned display having the protrusion including the third protrusion, the third protrusion preferably includes a portion extending in the vertical direction and a portion extending in the horizontal direction, the portion extending in the vertical direction preferably horizontally positions the side surfaces of the light guide and the display cell, and the portion extending in the horizontal direction is preferably formed to vertically position the upper portions of the light guide and the display cell. According to this structure, the third protrusion can vertically and horizontally position the light guide and the display cell, whereby the number of components can be reduced.

In the aforementioned display having the positioning portion including the protrusion, a plurality of protrusions are preferably provided and arranged in the vicinity of four corners of each of the display cell and the light guide respectively. According to this structure, the display cell and the light guide can be more stably positioned as compared with a case where the same are positioned by protrusions provided on two or three corner portions of each of the display cell and the light guide.

In the aforementioned display having the positioning portion including the protrusion, the light guide preferably includes a recess portion engaging with the protrusion. According to this structure, the protrusion and the light guide can be engaged with each other, whereby the light guide can be more reliably positioned.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a perspective view showing the overall structure of a liquid crystal television set according to an embodiment of the present invention;
Fig. 2 is an exploded perspective view showing the internal structure of a liquid crystal television set body of the liquid crystal television set shown in Fig. 1;
Fig. 3 is a front elevational view showing the structure of a rear cabinet portion of the liquid crystal television set body shown in Fig. 2;
Fig. 4 is a front elevational view showing the structure of a light guide of the liquid crystal television set body shown in Fig. 2;
Fig. 5 is a front elevational view showing a state of positioning the light guide on a rear cabinet of the liquid crystal television set body shown in Fig. 2;
Fig. 6 is a front elevational view showing a state of further positioning a liquid crystal cell on the rear cabinet shown in Fig. 5;
Fig. 7 is a perspective view showing the structure of a back surface portion of a front cabinet shown in Fig. 1; and
Figs. 8 and 9 are sectional views taken along the lines 500-500 and 600-600 in Fig. 6 respectively in a state of engaging the front cabinet with the rear cabinet.

### DESCRIPTION OF THE PREFERRED EMBODIMENTS

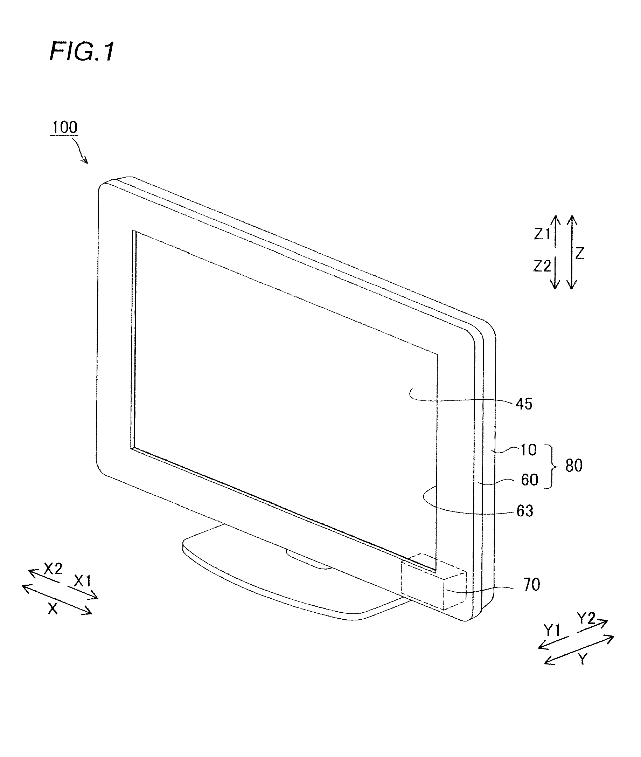

The structure of a liquid crystal television set 100 according to an embodiment of the present invention is now described with reference to Figs. 1 to 9. The liquid crystal television set 100 is an example of the "display" in the present invention.

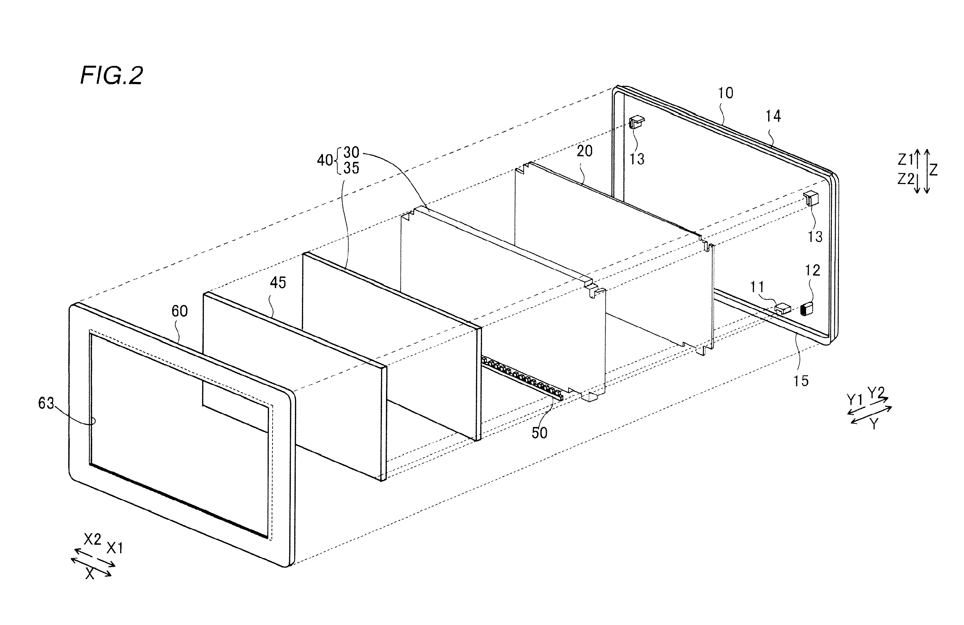

The liquid crystal television set 100 according to this embodiment includes a rear cabinet 10, a reflection sheet 20, a light guide 30, a liquid crystal cell 35, a sheet 45, an LED 50, a front cabinet 60 and a tuner 70 receiving television broadcasting, as shown in Figs. 1 and 2. The reflection sheet 20, the light guide 30, the liquid crystal cell 35 and the sheet 45 are successively stacked and stored in the rear cabinet 10. The rear cabinet 10 and the front cabinet 60 constitute a cabinet 80, while the light guide 30 and the liquid crystal cell 35 constitute a liquid crystal module 40. The LED 50 is connected with a power source (not shown), and arranged under the light guide 30 in the rear cabinet 10. The front cabinet 60 fits into the rear cabinet 10 storing the reflection sheet 20, the light guide 30, the liquid crystal cell 35, the sheet 45, the LED 50 and the tuner 70, to constitute the liquid crystal television set 100 (see Fig. 1). The rear cabinet 10 is an example of the "rear housing" in the present invention, and the front cabinet 60 is an example of the "front housing" in the present invention. The cabinet 80 is an example of the "housing" in the present invention, and the LED 50 is an example of the "light source" in the present invention. The tuner 70 is an example of the "receiving portion" in the present invention. The liquid crystal cell 35 is an example of the "display cell" in the present invention. The liquid crystal module 40 is an example of the "display module" in the present invention.

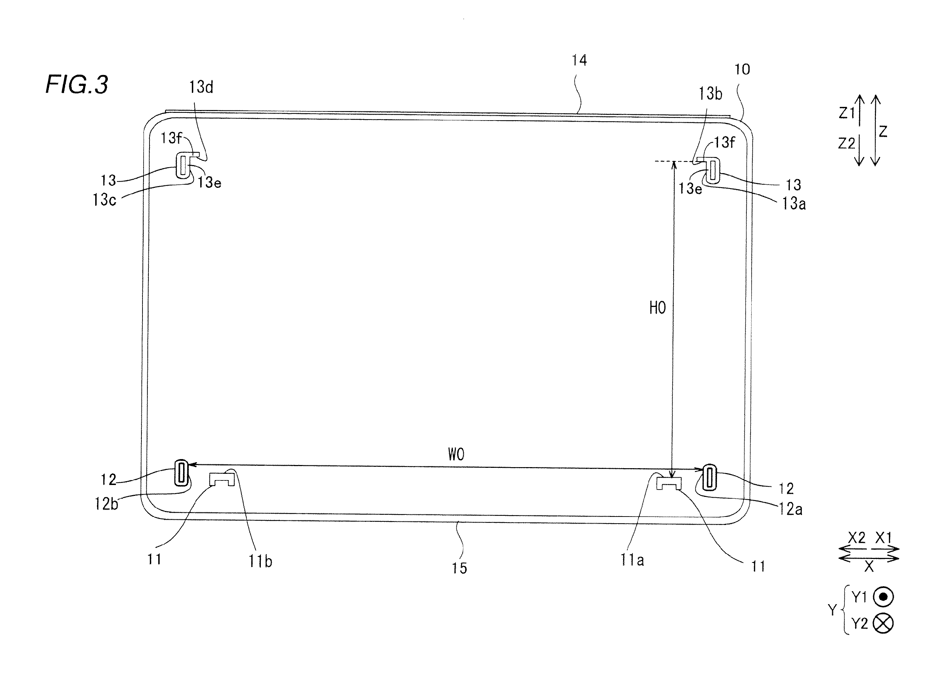

According to this embodiment, the rear cabinet 10 made of resin is integrally provided with a pair of positioning portions 11, another pair of positioning portions 12 and still another pair of positioning portions 13, as shown in Fig. 3. The positioning portions 11 are examples of the "protrusion" or the "first protrusion" in the present invention. The positioning portions 12 are examples of the "protrusion" or the "second protrusion" in the present invention. The positioning portions 13 are examples of the "protrusion" or the "third protrusion" in the present invention.

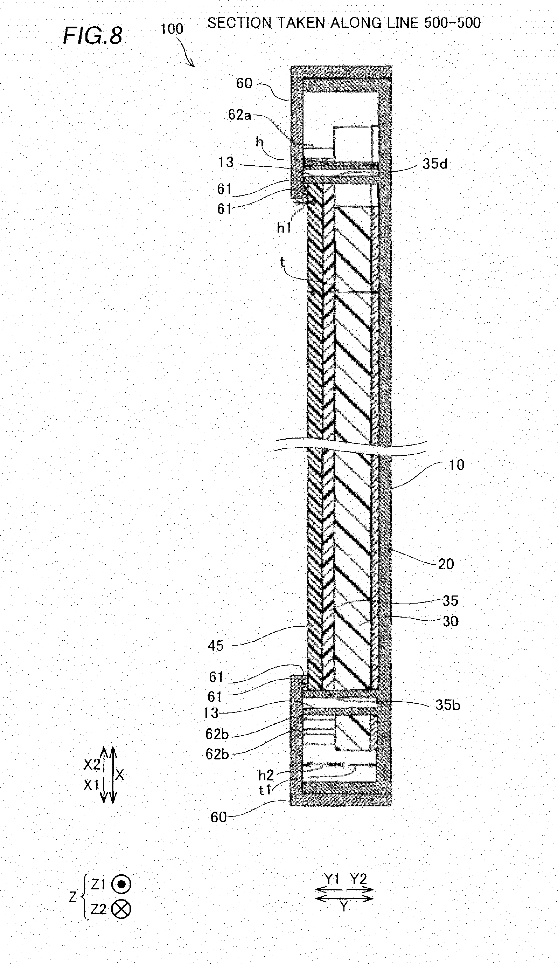

The positioning portions 11, 12 and 13 consist of riblike protrusions formed to protrude inward (along arrow Y1: see Fig. 2) into the rear cabinet 10. The positioning portions 11, 12 and 13 have a common height (protrusion height) h (see Fig. 8) larger than the total thickness of the liquid crystal cell 35 and the light guide 30.

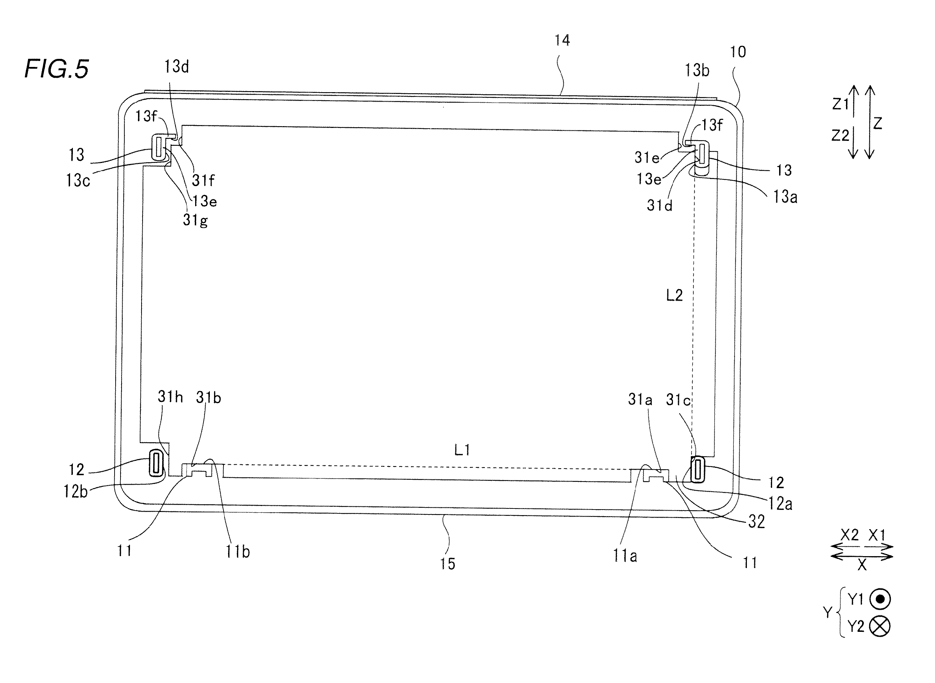

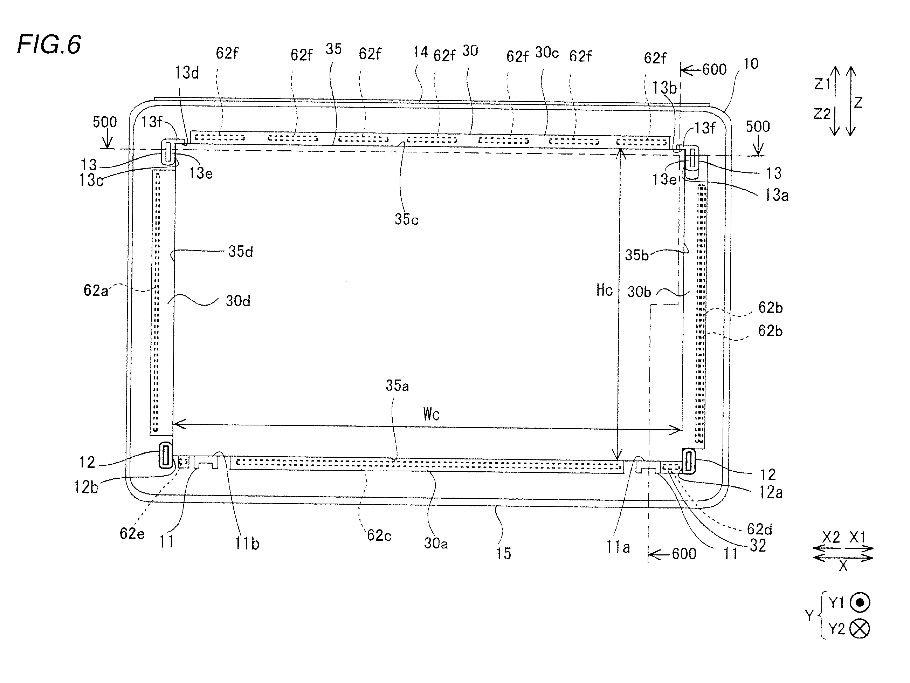

The pair of positioning portions 11 provided on the rear cabinet 10 are formed in the vicinity of lower corners of the inner surface (along arrow Y1) of the rear cabinet 10 respectively, to extend in a substantially horizontal direction (along arrows X1 and X2). The positioning portions 11 have contact surfaces 11a and 11b consisting of upper surfaces in the form of substantially horizontal planar surfaces. The contact surfaces 11a and 11b are provided for positioning the light guide 30 and the liquid crystal cell 35 by coming into contact with recess portions 31a and 31b (see Fig. 5) partially constituting a lower end surface of the light guide 30 and a lower end surface 35a (see Fig. 6) of the liquid crystal panel 35 in a surface contact state.

The pair of positioning portions 12 provided on the rear cabinet 10 are integrally formed on the rear cabinet 10 in the vicinity of both lower corners of the inner surface of the rear cabinet 10 respectively, to extend in a substantially vertical direction (along arrows Z1 and Z2). In the positioning portion 12 provided in the vicinity of the corner along arrow X1, a side surface along arrow X2 constitutes a contact surface 12a consisting of a substantially vertical planar surface. The contact surface 12a is provided for positioning the light guide 30 and the liquid crystal cell 35 by coming into contact with a recess portion 31c (see Fig. 5) formed by a side end surface of the light guide 30 and a side end surface 35b (see Fig. 6) of the liquid crystal cell 35 in a surface contact state. In the positioning portion 12 provided in the vicinity of the corner along arrow X2, a side surface along arrow X1 constitutes a contact surface 12b consisting of a substantially vertical planar surface. The contact surface 12b is provided for positioning a recess portion 31h (see Fig. 5) formed by another side end surface of the light guide 30 and another side end surface 35d (see Fig. 6) of the liquid crystal cell 35.

The pair of positioning portions 13 provided on the rear cabinet 10 extend in the substantially vertical direction (along arrows Z1 and Z2), have portions extending in the substantially horizontal direction (along arrows X1 and X2) from upper portions thereof, and are integrally formed in the vicinity of both upper corners of the inner surface (along arrow Y1) of the rear cabinet 10. The positioning portions 13 include vertical protruding portions 13e extending in the substantially vertical direction (direction Z) and horizontal protruding portions 13f extending in the substantially horizontal direction (direction X). In the positioning portion 13 provided in the vicinity of the corner along arrow X1, a side surface along arrow X2 constitutes a contact surface 13a consisting of a substantially vertical planar surface while a lower surface along arrow Z2 constitutes a contact surface 13b consisting of a substantially horizontal planar surface. The contact surface 13a extending in the substantially vertical direction (direction Z) is provided for positioning the light guide 30 and the liquid crystal cell 35 by coming into contact with a recess portion 31d (see Fig. 5) formed by still another side end surface of the light guide 30 and the side end surface 35b (see Fig. 6) of the liquid crystal cell 35 in a surface contact state, while the contact surface 13b extending in the substantially horizontal direction (direction X) is provided for positioning a recess portion 31e (see Fig. 5) formed by a further side end surface of the light guide 30 and an upper end surface 35c (see Fig. 6) of the liquid crystal cell 35. In the positioning portion l3 provided in the vicinity of the corner along arrow X2, a side surface along arrow X1 constitutes a contact surface 13c consisting of a substantially vertical planar surface, while a lower surface along arrow Z2 constitutes a contact surface 13d consisting of a substantially horizontal planar surface. The contact surface 13c is provided for positioning a recess portion 31g (see Fig. 5) formed by a further side end surface of the light guide 30 and the side end surface 35d (see Fig. 6) of the liquid crystal cell 35, while the contact surface 13d is provided for positioning a recess portion 31f (see Fig. 5) formed by a further side end surface of the light guide 30 and the upper end surface 35c (see Fig. 6) of the liquid crystal cell 35. The positioning portions 11 to 13 are formed to also directly position the reflection sheet 20 provided on the back surface of the light guide 30, along with the light guide 30 and the liquid crystal cell 35. The vertical protruding portions 13e are examples of the "portion extending in the vertical direction" in the present invention. The horizontal protruding portions 13f are examples of the "portion extending in the horizontal direction" in the present invention.

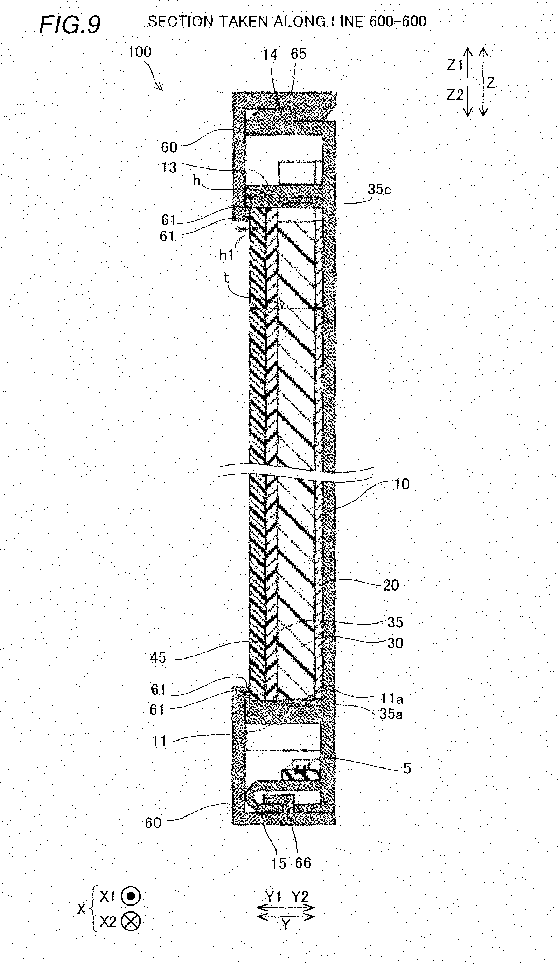

As shown in Fig. 9, an engaging portion 14 is formed on an outer upper surface of the rear cabinet 10 along the substantially horizontal direction (along arrows X1 and X2). This engaging portion 14 is formed to engage with an engaging portion 65 formed on an inner upper surface of the front cabinet 60. Similarly, another engaging portion 15 is formed on the lower surface of the rear cabinet 10 along the substantially horizontal direction (along arrows X1 and X2). This engaging portion 15 is formed to engage with another engaging portion 66 formed on an inner lower surface of the front cabinet 60 described later.

The reflection sheet 20 is formed in a shape substantially identical to that of the light guide 30 in plan view, as shown in Fig. 2. The reflection sheet 20 is provided on the side of the back surface (along arrow Y2) of the light guide 30, and has a function of increasing brightness of the liquid crystal cell 35 by reflecting light leaking out of the back surface of the light guide 30 toward the light guide 30.

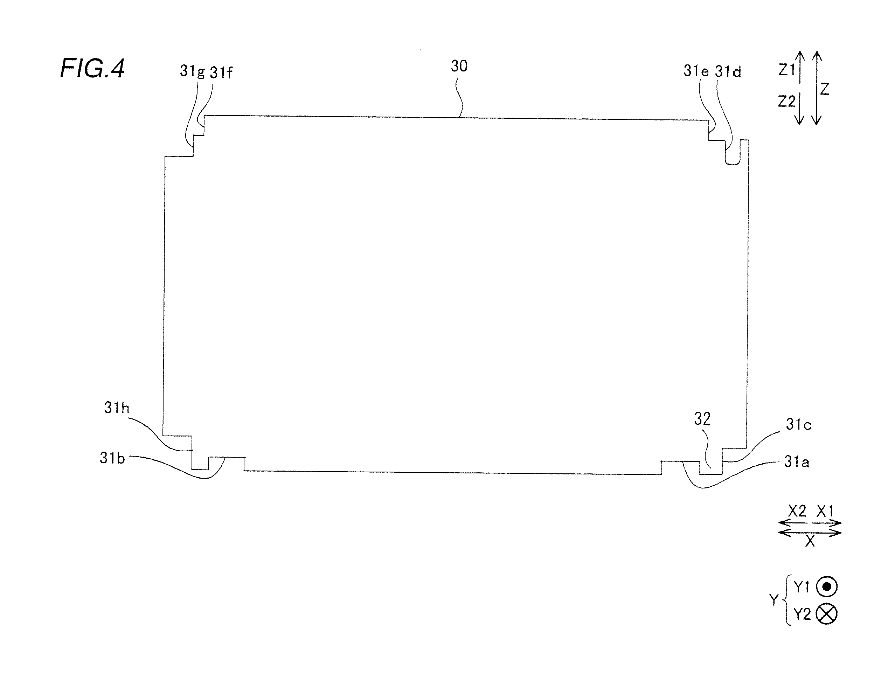

As shown in Fig. 4, the recess portions 31 (31a to 31h) are formed in the vicinity of four corners of the light guide 30. These recess portions 31 are formed on positions corresponding to those provided with the positioning portions 11, 12 and 13 of the rear cabinet 10 for positioning the light guide 30 when the light guide 30 is stored in the rear cabinet 10, as shown in Fig. 5. The light guide 30 includes a projecting portion 32 fitting into a space between the positioning portions 11 and 12 along arrow X1. The projecting portion 32 fits into the space between the positioning portions 11 and 12 along arrow X1, thereby regulating movement of the light guide 30 along the direction X. When the liquid crystal television set l00 is in use, the light guide 30 receives light from the LED 50, and is heated to expand. The recess portions 31 are so shaped as to partially come into contact with the positioning portions 11, 12 and 13, to be capable of coping with such expansion of the light guide 30. More specifically, the recess portions 31a and 31b partially constituting the lower end surface of the light guide 30 come into contact with the contact surfaces 11a and 11b respectively as shown in Fig. 5, thereby vertically positioning the light guide 30. Further, the recess portions 31c and 31d positioned on the side end surfaces of the light guide 30 come into contact with the contact surfaces 12a and 13a positioned on the lower and upper corners along arrow X1 respectively, thereby horizontally positioning the light guide 30. In other words, the light guide 30 is aligned with the vertical position of a line segment L1 (shown by a broken line in Fig. 5) connecting the contact surfaces 11a and 11b with each other, to be vertically positioned. Further, the light guide 30 is aligned with the vertical position of another line segment L2 (shown by another broken line in Fig. 5) connecting the contact surfaces 12a and 13a along arrow X1 with each other, to be horizontally positioned. Between the positioning portion 12 along arrow X2 and the light guide 30, a clearance (space) against thermal expansion is provided in the substantially horizontal direction (direction X). Between the positioning portion 12 along arrow X2 and the light guide 30, further, another clearance (space) against thermal expansion is provided in the substantially vertical direction (direction Z).

The liquid crystal cell 35 is provided in a substantially rectangular shape corresponding to that surrounded by the contact surfaces 11a, 11b, 12a, 12b and 13a to 13d of the positioning portions 11, 12 and 13 of the rear cabinet 10, as shown in Fig. 6. More specifically, the width Wc of the liquid crystal cell 35 is substantially identical to the width W0 (see Fig. 3) of the contact surfaces 12a and 12b of the positioning portions 12 (contact surfaces 23a and 13c of the positioning portions 13). Further, the height Hc of the liquid crystal cell 35 is substantially identical to the height H0 (see Fig. 3) from the contact surface 11a of the positioning portion 11 along arrow X1 to the contact surface 13b of the positioning portion 13 along arrow X1 in the direction along arrow X1 (or along arrow X2). Thus, the positioning portions 11, 12 and 13 can position the liquid crystal cell 35 in an untottering state. The lower end surface 35a and the upper end surface 35c of the liquid crystal cell 35 come into contact with the contact surfaces 11a and 11b and the contact surfaces 13b and 13d respectively, thereby vertically positioning the liquid crystal cell 35. Further, the side end surfaces 35b and 35d of the liquid crystal cell 35 along arrows X1 and X2 come into contact with the contact surfaces 12a and 13a and the contact surfaces 12b and 13c respectively, thereby horizontally positioning the liquid crystal cell 35. Thus, the liquid crystal cell 35 is stacked on the light guide 30 (see Fig. 5) previously stored in the rear cabinet 10 in the positioned state.

The light guide 30 is so formed that regions 30a, 30b, 30c and 30d thereof protrude outward from four sides of the liquid crystal cell 35 in the state where the liquid crystal cell 35 is stored in the rear cabinet 10, as shown in Fig. 6.

The sheet 45 is provided on a surface of the liquid crystal cell 35 along arrow Y1, as shown in Fig. 2. The sheet 45 is provided in a substantially rectangular shape, similarly to the liquid crystal cell 35. According to this embodiment, a sheet such as an antireflective sheet, a view angle improving sheet or a brightness improving sheet is employed as the sheet 45, in response to the application of the liquid crystal display 100.

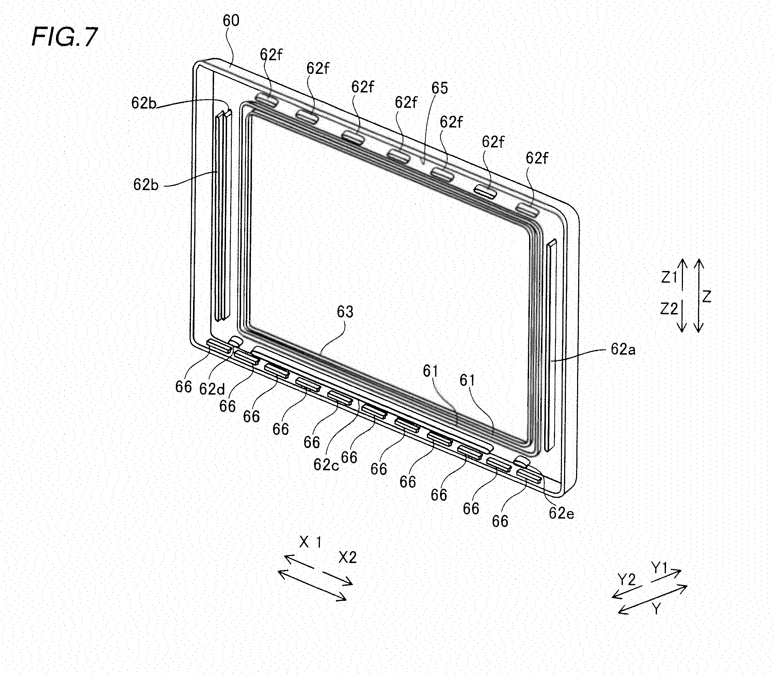

The front cabinet 60 is constituted of a substantially rectangular frame, as shown in Fig. 7. First and second stop sections 61 and 62 are formed on the back surface of the front cabinet 60 along arrow Y2. The reflection sheet 20, the light guide 30, the liquid crystal cell 35 and the sheet 45 are held between the first stop sections 61 and the rear frame 10 with no clearance, while the reflection sheet 20 and the light guide 30 are held between the second stop sections 62 and the rear frame 10 with no clearance.

The first stop sections 61 are constituted of two substantially rectangular ribs circumferentially extending in an opposed manner, as shown in Fig. 7. More specifically, the first stop sections 61 are integrally formed on the front cabinet 60, to be along the periphery of a substantially rectangular inner peripheral portion 63 of the front cabinet 60 and to protrude from the back surface of the front cabinet 60 along arrow Y2. The first stop sections 61 are formed to come into contact with portions in the vicinity of edge portions of the liquid crystal cell 35 (sheet 45).

The liquid crystal television set 100 is so formed that the total thickness t of the reflection sheet 20, the light guide 30, the liquid crystal cell 35 and the sheet 45 is slightly smaller than the height h of the positioning portions 11, 12 and 13, as shown in Figs. 8 and 9. Further, the liquid crystal television set 100 is so formed that the height h1 of the first stop sections 61 is substantially equal to the difference (h1 = h - 1) between the height h of the positioning portions 11, 12 and 13 and the total thickness t of the reflection sheet 20, the light guide 30, the liquid crystal cell 35 and the sheet 45. Thus, the reflection sheet 20, the light guide 30, the liquid crystal cell 35 and the sheet 45 can be held between the first stop sections 61 and the rear cabinet 10 with no clearance to be reliably fixed.

The second stop sections 62 (62a to 62f) are constituted of ribs 62a and 62b formed to continuously extend in the substantially vertical direction, ribs 62c to 62e formed to continuously extend in the substantially horizontal direction and seven ribs 62f formed to intermittently extend in the substantially horizontal direction, as shown in Fig. 7. More specifically, the second stop sections 62 (62a to 62f) are integrally formed on the front cabinet 60, to extend from portions of the front cabinet 60 outward beyond the first stop sections 61 toward the back surface (along arrow Y2) of the front cabinet 60.

As shown in Fig. 6, the second stop sections 62a and 62b extending in the substantially vertical direction (along arrows Z1 and Z2) are formed to come into contact with the regions 30d and 30b of the light guide 30 protruding from the liquid crystal cell 35 along arrows X2 and X1 respectively. The second stop sections 62 (62c to 62f) extending in the substantially horizontal direction (along arrows X1 and X2) are formed to come into contact with the regions 30c and 30a of the light guide 30 protruding from the liquid crystal cell 35 along arrows Z1 and Z2 respectively.

As shown in Fig. 8, the liquid crystal television set 100 is so formed that the total thickness t1 of the reflection sheet 20 and the light guide 30 is smaller than the height h of the positioning portions 11, 12 and 13. Further, the liquid crystal television set 100 is so formed that the height h2 of the second stop sections 62 is substantially equal to the difference (h2 = h - t1) between the height h of the positioning portions 11, 12 and 13 and the total thickness t1 of the reflection sheet 20 and the light guide 30. Thus, the reflection sheet 20 and the light guide 30 are held between the second stop sections 62 and the rear frame 10 with no clearance, to be reliably fixed. The first and second stop sections 61 and 62 are so provided that the reflection sheet 20 and the light guide 30 may not be fixed with fixing members such as screws, whereby increase in the number of assembling steps can be suppressed.

According to this embodiment, as hereinabove described, the liquid crystal television set 100 is provided with the rear cabinet 10 integrally provided therein with the positioning portions 11, 12 and 13 directly positioning the liquid crystal cell 35 and the light guide 30 so that no positioning members for positioning the liquid crystal cell 35 and the light guide 30 may be separately provided, whereby increase in the numbers of components and assembling steps can be suppressed.

According to this embodiment, as hereinabove described, the positioning portions 11, 12 and 13 are formed by protrusions positioning edge portions of the liquid crystal cell 35 and the light guide 30, whereby the liquid crystal cell 35 and the light guide 30 can be easily positioned by simply providing the protrusions in the housing 70.

According to this embodiment, as hereinabove described, the positioning portions 11, 12 and 13 are formed to have the protrusion height h larger than the total thickness of the liquid crystal cell 35 and the light guide 30 so that the positioning portions 11, 12 and 13 can be brought into contact with the liquid crystal cell 35 and the light guide 30 over the whole in the thickness direction for positioning the liquid crystal cell 35 and the light guide 30, whereby the liquid crystal cell 35 and the light guide 30 can be reliably positioned.

According to this embodiment, as hereinabove described, the positioning portions 11, 12 and 13 are integrally provided on the rear cabinet 10 and formed in a riblike manner so that protrusions are formed on the rear cabinet 10 less restricted in design than the front cabinet 60 provided on the side of a display surface, whereby the protrusions provided on the rear cabinet 10 for serving as the positioning portions 11, 12 and 13 can be inhibited from restricting flexibility in design.

According to this embodiment, as hereinabove described, the positioning portions 11, 12 and 13 are provided with the planar contact surfaces 11a, 11b, 12a, 12b and 13a to 13d coming into contact with the liquid crystal cell 35 and the light guide 30 and formed to position the liquid crystal cell 35 and the light guide 30 in the state where the contact surfaces 11a, 11b, 12a, 12b and 13a to 23d are in surface contact with the liquid crystal cell 35 and the light guide 30, whereby the positioning portions 11, 12 and 13 can stably position the liquid crystal cell 35 and the light guide 30 through the planar contact surfaces 11a, 11b, 12a, 12b and 13a to 13d in surface contact with the liquid crystal cell 35 and the light guide 30.

According to this embodiment, as hereinabove described, the light guide 30 and the liquid crystal cell 35 are held between and fixed by the front cabinet 60 and the rear cabinet 10 so that no fixing members may be separately provided for fixing the light guide 30 and the liquid crystal cell 35, whereby increase in the numbers of components and assembling steps can be further suppressed.

According to this embodiment, as hereinabove described, the liquid crystal television set 100 is provided with the positioning portions 11 extending in the substantially horizontal direction for vertically positioning the lower surfaces of the liquid crystal cell 35 and the light guide 30 and the positioning portions 12 extending in the substantially vertical direction for horizontally positioning the side surfaces the liquid crystal cell 35 and the light guide 30 so that the lengths of portions for positioning the liquid crystal cell 35 and the light guide 30 can be increased due to the positioning portions 11 and 12 extending in the substantially horizontal and vertical directions respectively, whereby the positioning portions 11 and 12 can stably position the liquid crystal cell 35 and the light guide 30.

According to this embodiment, as hereinabove described, the positioning portions 11 and 12 are formed to position both of the liquid crystal cell 35 and the light guide 30 so that the common positioning portions 11 and 12 position the liquid crystal cell 35 and the light guide 30, whereby the structure of the liquid crystal television set 100 can be simplified.

According to this embodiment, as hereinabove described, the liquid crystal television set 100 is provided with the positioning portions 13 vertically and horizontally positioning the upper portions of the liquid crystal cell 35 and the light guide 30 so that the positioning portions 13 position the liquid crystal cell 35 and the light guide 30 in an upper direction in addition to the substantially horizontal direction and a lower direction, whereby the liquid crystal cell 35 and the light guide 30 can be more stably positioned.

According to this embodiment, as hereinabove described, the liquid crystal television set 100 is provided with the pairs of positioning portions 11 and 12 and the light guide 30 is provided with the projecting portion 32 fitting into the space between the positioning portions 11 and 12 along arrow X1, whereby the light guide 30 can be precisely y positioned by fitting the projecting portion 32 thereof into the space between the positioning portions 11 and 12 along arrow X1.

According to this embodiment, , as hereinabove described, , the clearance against thermal expansion is provided between the positioning portion 12 along arrow X2 and the light guide 30, whereby the liquid crystal television set 100 can also cope with thermal expansion of the light guide 30 while precisely positioning the light guide 30 with the positioning portions 11 and 12.

According to this embodiment, as hereinabove described, the liquid crystal television set 100 is further provided with the reflection sheet 20, formed in the shape substantially identical to that of the light guide 30, for reflecting the light leaking out of the back surface of the light guide 30 toward the light guide 30 while the positioning portions 11 to 13 position the light guide 30 and the reflection sheet 20 by directly coming into contact with the same so that the common positioning portions 11 to 13 position both of the light guide 30 and the reflection sheet 20, whereby the structure of the liquid crystal television set 100 can be inhibited from complication.

According to this embodiment, as hereinabove described, the positioning portions 13 are provided with the portions extending in the substantially vertical direction and the substantially horizontal direction respectively while the portions extending in the substantially vertical direction are formed to horizontally position the side surfaces of the light guide 30 and the liquid crystal cell 35 and the portions extending in the substantially horizontal direction are formed to vertically position the upper portions of the light guide 30 and the liquid crystal cell 35 so that no portions extending in the substantially horizontal and vertical directions for vertically and horizontally positioning the light guide 30 and the liquid crystal cell 35 may be separately provided, whereby the number of components can be reduced.

According to this embodiment, as hereinabove described, the positioning portions 11, 12 and 13 are provided in plural respectively to be arranged in the vicinity of the four corners of each of the liquid crystal cell 35 and the light guide 30, whereby the liquid crystal cell 35 and the light guide 30 can be more stably positioned as compared with a case where the liquid crystal cell 35 and the light guide 30 are positioned by protrusions provided on two or three corners of each of the liquid crystal cell 35 and the light guide 30.

According to this embodiment, as hereinabove described, the light guide 30 is provided with the recess portions 31 (31a to 31d) engaging with the positioning portions 11, 12 and 13 so that the protrusions and the light guide 30 can engage with each other, whereby the light guide 30 can be more reliably positioned.

Although the present invention has been described and illustrated in detail, it is clearly understood that the same is by way of illustration and example only and is not to be taken by way of limitation, the spirit and scope of the present invention being limited only by the terms of the appended claims.

While the positioning portions are formed in the rear cabinet 10 in the aforementioned embodiment, the present invention is not restricted to this. The positioning portions may alternatively be formed in the front cabinet. Further alternatively, the positioning portions may be formed in both of the front and rear cabinets.

While the liquid crystal television set 100 is provided with the positioning portions positioning both of the liquid crystal cell 35 and the light guide 30 in the aforementioned embodiment, the present invention is not restricted to this. The positioning portions may alternatively position only either the liquid crystal cell or the light guide.

While the LED 50 is set under the light guide 30 in the aforementioned embodiment, the present invention is not restricted to this. The LED may simply be set on a. position where the same can apply light to the light guide, and may alternatively be set above or beside the light guide. While the LED 50 is employed as the light source in the aforementioned embodiment, the present invention is not restricted to this. Alternatively, a cold cathode tube or a fluorescent tube may be employed in place of the LED.

While the second stop sections 62 (62a to 62f) of the front cabinet 60 are constituted of the ribs 62a and 62b formed to continuously extend in the substantially vertical direction, the ribs 62c to 62e formed to continuously extend in the substantially horizontal direction and the ribs 62f formed to intermittently extend in the substantially horizontal direction in the aforementioned embodiment, the present invention is not restricted to this. The second stop sections may alternatively be formed only by continuously extending or intermittently extending ribs.

While the recess portions of the light guide 30 are formed in the vicinity of the four corners of the light guide 30 in the aforementioned embodiment, the present invention is not restricted to this. The recess portions may alternatively be formed on overall peripheral edge portions of the light guide, in addition to the vicinity of the four corners thereof. Further alternatively, the light guide may be provided with no recess portions.

While the recess portions provided on the light guide 30 are substantially rectangular in the aforementioned embodiment, the present invention is not restricted to this. The recess portions may alternatively be triangular or arcuate, so far as the same can position the light guide along with the positioning portions.

While the front and rear cabinets 60 and 10 are fixed through the engaging portions in the aforementioned embodiment, the present invention is not restricted to this. The front and rear cabinets may alternatively be fixed with screws or an adhesive agent.

While the liquid crystal television set 100 is provided with the six positioning portions (pairs of positioning portions 11, 12 and 13) in total in the aforementioned embodiment, the present invention is not restricted to this. The number of the positioning portions may alternatively be one to five, or at least seven.

While the liquid crystal television set 100 is provided with the positioning portions consisting of the riblike protrusions in the aforementioned embodiment, the present invention is not restricted to this. The positioning portions may alternatively be provided in the form of hooks bent to come into contact with edge portions of end surfaces and the front surface of the light guide.

While the positioning portions are formed to position the liquid crystal cell 35 and the light guide 30 in the aforementioned embodiment, the present invention is not restricted to this. The positioning portions may alternatively be formed to position only either the display cell or the light guide.

While the liquid crystal television set 100 is so formed that the common positioning portions position the liquid crystal cell 35 and the light guide 30 in the aforementioned embodiment, the present invention is not restricted to this. The liquid crystal television set 100 may alternatively be individually provided with positioning portions for positioning the liquid crystal cell and those for positioning the light guide.

While the positioning portions are provided on the four corners of the rear cabinet 10 in the aforementioned embodiment, the present invention is not restricted to this. The positioning portions may alternatively be provided not on the four corners, but only on the lower side.

While the liquid crystal television set 100 is provided with a pair of upper positioning portions in the aforementioned embodiment, the present invention is not restricted to this. Upper positioning portions may alternatively be constituted of two pairs of positioning portions, similarly to lower positioning portions.

While the present invention is applied to the liquid crystal television set including the liquid crystal module including the liquid crystal cell in the aforementioned embodiment, the present invention is not restricted to this. The present invention may alternatively be applied to a television set or a display including a display module including not a liquid crystal cell but a display cell.

## Claims

1. A display (100) comprising:
a light source (50);
a display module (40) including a display cell (35) and a light guide (30) stacked on said display cell for guiding light received from said light source to said display cell; and
a housing (80), storing said light source and said display module, integrally provided therein with a positioning portion (11, 12, 13) directly positioning at least either said display cell or said light guide.

2. The display according to claim 1, wherein
said positioning portion includes a protrusion (11, 12, 13) positioning an edge portion of at least either said display cell or said light guide.

3. The display according to claim 1, wherein
said positioning portion has a protrusion height larger than the total thickness of said display cell and said light guide.

4. The display according to claim 2, wherein
said housing includes a front housing (60) and a rear housing (10), and
said protrusion is integrally provided on said rear housing and formed in a riblike manner.

5. The display according to claim 2, wherein
said protrusion includes a planar contact surface coming into contact with said display cell and said light guide, and is formed to position said display cell and said light guide in a state where said contact surface is in surface contact with said display cell and said light guide.

6. The display according to claim 4, wherein
said light guide and said display cell positioned and stored in said housing are held between and fixed by said front housing and said rear housing.

7. The display according to claim 2, wherein
said protrusion includes:
a first protrusion (11) extending in a horizontal direction and vertically positioning lower surfaces of said display cell and said light guide, and
a second protrusion (12) extending in a vertical direction and horizontally positioning side surfaces of said display cell and said light guide.

8. The display according to claim 7, wherein
said first protrusion and said second protrusion are formed to position both of said display cell and said light guide.

9. The display according to claim 7, wherein
said protrusion includes a third protrusion (13) vertically and horizontally positioning upper portions of said display cell and said light guide.

10. The display according to claim 7, wherein
said protrusion is provided with a pair of said first protrusions and a pair of said second protrusions, and
said light guide includes a projecting portion fitting into a space between one of said pair of first protrusions and one of said pair of second protrusions.

11. The display according to claim 10, wherein
a clearance against thermal expansion is provided between the other one of said pair of second protrusions and said light guide.

12. The display according to claim 10, further comprising a reflection sheet (20), identical in shape to said light guide, for reflecting light leaking out of the rear surface of said light guide toward said light guide, wherein
said positioning portion is formed to position said light guide and said reflection sheet by directly coming into contact with said light guide and said reflection sheet.

13. The display according to claim 9, wherein
said third protrusion includes a portion extending in said vertical direction (13e) and a portion extending in said horizontal direction (13f),
said portion extending in said vertical direction horizontally position said side surfaces of said light guide and said display cell, and
said portion extending in said horizontal direction is formed to vertically position said upper portions of said light guide and said display cell.

14. The display according to claim 2, wherein
a plurality of protrusions are provided and arranged in the vicinity of four corners of each of said display cell and said light guide respectively.

15. The display according to claim 2, wherein
said light guide includes a recess portion (31) engaging with said protrusion.
